# EUROPÄISCHE PATENTSCHRIFT

(11) **EP 2 411 273 B1**
(45) Veröffentlichungstag und Bekanntmachung des Hinweises auf die Patenterteilung: **06.03.2013**
(21) Anmeldenummer: 10708520.1
(22) Anmeldetag: 09.03.2010
(51) Int. Cl.: B64D 11/00, B64D 11/02, B64D 11/04

(54) **KONFEKTIONIERBARE MONUMENTE**
ASSEMBLY-READY STRUCTURES
UNITES MODULAIRES AMENAGEABLES

(30) Priorität: 24.03.2009 DE 102009014598; 24.03.2009 US 162791 P
(43) Veröffentlichungstag der Anmeldung: 01.02.2012
(73) Patentinhaber: Airbus Operations GmbH, 21129 Hamburg (DE)
(72) Erfinder: SCHLIWA, Ralf, 21739 Dollern (DE)
(74) Vertreter: Maiwald Patentanwalts GmbH
(86) Internationale Anmeldenummer: PCT/EP2010/052934
(87) Internationale Veröffentlichungsnummer: WO 2010/108775

(56) Entgegenhaltungen:
- EP-A1- 1 803 645
- EP-A2- 1 174 340
- DE-A1- 10 164 068
- DE-A1-102005 043 610
- DE-A1-102006 048 998
- DE-A1-102007 003 802
- DE-A1-102007 029 677
- US-A- 5 083 727
- US-A1- 2007 262 212

## Beschreibung

Die vorliegende Anmeldung beansprucht die Priorität der deutschen Patentanmeldung 10 2009 014 598.2, eingereicht am 24. März 2009 und der US-Provisional Application 61/162,791, eingereicht am 24. März 2009.

### Gebiet der Erfindung

Die Erfindung betrifft die Ausstattung von Transportmittelkabinen. Insbesondere betrifft diese Erfindung ein Monument für eine Kabine eines Transportmittels, wie etwa ein Toilettenmonument, ein Küchenmonument oder ein Staumonument zur Ausstattung eines Flugzeugs, eines Hubschraubers, eines Schiffes, eines Zuges oder eines Wohnwagens. Daneben betrifft die Erfindung ein Einbausystem mit einem oder mehreren Monumenten und ein Transportmittel mit einem darin verbauten Monument.

### Technischer Hintergrund

Derartige Monumente können in Transportmitteln, beispielweise Flugzeugen, an sogenannten "Hard Points" befestigt sein. Bei einem Hard Point handelt es sich um einen für ein bestimmtes Monument geschaffenen Befestigungspunkt, bei dem es sich um Bohrungen in einem tragenden Element des Transportmittels handeln kann. Diese Hard Points können für verschiedene Monumente, wie etwa ein Küchenelement und ein Toilettenmonument, unterschiedliche Durchmesser aufweisen oder zur Aufnahme unterschiedlicher Befestigungsmittel, wie etwa Schrauben oder Klemmen, vorgesehen sein. Zur Lagerung der von einem Monument auf seine Hard Points ausgeübten Kräfte kann es sein, dass im Transportmittel Stützelemente vorgesehen werden müssen. Weiter ist es möglich, dass in Bodenplatten der Kabine des Transportmittels Bohrungen vorgesehen werden müssen, um Zugriff zu den Hard Points zu erlangen. So muss bereits bei der Konzeption des Transportmittels bedacht werden, an welcher Stelle welches Monument aufgestellt werden soll.

Insbesondere bei Flugzeugen ist die Befestigung der Monumente am Flugzeugrumpf nicht standardisiert, sondern speziell auf die Integration des speziellen Monuments in das Flugzeug abgestimmt. Beispielsweise unterscheidet sich die Befestigung von Monumenten von der Befestigung von Staufächern.

Auch die Anschlüsse von Monumenten an Bordsysteme, wie etwa Strom, Brauch- und Abwasser, sind nicht standardisiert. Die Kabel und Rohre zu den Anschlüssen werden speziell zum Stellplatz eines Monuments verlegt. Um ein nahtloses Anfügen der Monumente an eine Seitenverkleidung zu ermöglichen, werden Lücken zwischen der Seitenverkleidung und einem Monument durch Beschnittteile gefüllt. Häufig führt dies zu einer großen Anzahl an Beschnittteilen.

Im Allgemeinen verursacht der Einbau von Monumenten in ein Transportmittel einen erheblichen Anpassungsaufwand in der Kabine des Transportmittels. Auch ein schnelles Umrüsten des Transportmittels zwischen zwei Fahrten oder Flügen wird nahezu unmöglich.

Die DE 10 2005 043 610 A1 und die US 2007 102579 A1 beschreiben ein Monument für ein Flugzeug. Das Monument umfasst Befestigungselemente zur Befestigung des Monuments an korrespondierenden Befestigungselementen einer Flugzeugfläche in einem Flugzeug an einer vorbestimmten Stelle.

Die US 5 083 727 A bildet den nächstliegenden Stand der Technik und betrifft ein Kabinensystem für ein Luftfahrzeug, bei dem Galleys an Sitzschienen befestigt werden können. Die Galleys weisen flexible Leitungsanschlüsse auf.

Die DE 10 2007 029 677 A1 betrifft ein Compartmentsystem mit Schwellen, die von einem Container überfahren werden können.

Die DE 10 2007 003 802 A1 betrifft eine flexible Kabelanbindung mit Kettengliedern für ein Monument in einem Flugzeug.

Die EP 1 174 340 A2 betrifft ein automatisches System zum Aufbewahren von Galley-Wagen.

Die DE 101 64 068 A1 betrifft variabel positionierbare Fahrzeugsitze für ein Straßenfahrzeug mit einem induktiven Energie- und Informations-Übertragungssystem.

Die US 2007/0262212 A1 betrifft eine Monument-Einpassanordnung mit der ein Monument in einem Flugzeug installiert werden kann.

Die EP 1 803 645 A1 betrifft ein Modul für ein Flugzeug mit einem in einer Schiene geführten Versorgungsanschluss.

Die DE 10 2006 048 998 A1 betrifft ein teleskopartig ausfahrbares Gepäckfach.

### Zusammenfassung der Erfindung

Es ist Aufgabe der Erfindung, die Einbau- oder Umrüstzeit eines Transportmittels zu reduzieren und zusätzlich Gewicht im Transportmittel einzusparen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Gemäß der Erfindung umfasst ein Monument für eine Kabine eines Transportmittels ein Befestigungselement zur Befestigung des Monuments an der Kabine bzw. einer tragenden Struktur des Rumpfs des Transportmittels, Henigstens einen Versorgungsanschluss zum Verbinden des Monuments mit trenigstens einem Bordsystem des Transportmittels, wobei das Befestigungselement derart ausgeführt ist, dass die Befestigung des Monuments in einem Bereich von Relativpositionen des Monuments zur Kabine des Transportmittels vornehmbar ist, wobei das Befestigungselement mit einer Sitzschiene des Transportmittels verbindbar ist, wobei der Versorgungsanschluss ein Monument. Anschlussende auf weist, das mit einem Transport-mittel-Anschlussende des Bord systems verbindbar ist,
wobei das Monument-Auschlussende relativ zum Monument beizegbar ist, indem das Monument. Anschlussende entlang einer Öffnung des Monuments verschoben werden kann.

Durch Flexibilisieren wenigstens eines Befestigungselements des Monuments und Standardisieren von Befestigungsstellen oder Befestigungspunkten des Transportmittels wird der Anpassungsaufwand von der Kabine des Transportmittels zum Monument verlagert. Daneben wird der Anpassungsaufwand dadurch verringert, dass die flexiblen Befestigungsmittel unter geringem Aufwand an den Befestigungsort des Monuments im Transportmittel angepasst werden können.

Das flexible Befestigungselement ermöglicht es, das Monument innerhalb eines Bereichs von Relativpositionen innerhalb der Kabine des Transportmittels zu befestigen, ohne dass wesentliche Veränderungen an der Kabine vorgenommen werden müssen. Der Anpassungsaufwand, der dadurch entsteht, dass die Kabine an das aufzunehmende Monument angepasst werden muss, entfällt.

Weiter ist es nicht mehr notwendig, für jede Relativposition, an der ein Monument in einer Kabine vorgesehen sein kann, Befestigungspunkte und die dafür notwendigen Last aufnehmenden Verbindungen vorzusehen. Diese gesonderten Befestigungspunkte und Last aufnehmenden Verbindungen können entfallen, womit eine Gewichtsersparnis für das Transportmittel realisiert wird.

Gemäß einer Ausführungsform wird bei Flugzeugen oder Schiffen das flexible Befestigungselement an Spanten oder Trägern des Rumpfs des Flugzeugs oder des Schiffs befestigt.

Neben wenigstens einem flexiblen Befestigungselement ist auch eine Mehrzahl von flexiblen Befestigungselementen möglich, die an dem Monument befestigt bzw. in dem Monument integriert sein können.

Gemäß einer Ausführungsform ist das Befestigungselement mit einer Befestigungsschiene für ein Staufach verbindbar. Bei dem Staufach kann es sich zum Beispiel um ein Überkopf-Staufach, beispielsweise eine Gepäckablage, handeln. Eine Befestigungsschiene für Staufächer ist in der Regel in jeder Kabine des Transportmittels bereits vorhanden, so dass gesonderte Befestigungsstellen für das Monument entfallen.

Gemäß der Erfindung ist das Befestigungselement mit einer Sitzschiene des Transportmittels verbindbar. In Kabinen von Transportmitteln sind häufig bereits Sitzschienen vorhanden, mit denen Sitze oder Sitzreihen für Passagiere am Boden oder der Bodenträgerstruktur des Transportmittels befestigt werden können. Durch das Befestigen des Monuments an den Sitzschienen entfallen gesonderte, spezielle Befestigungsstellen für das Monument.

Gemäß einer Ausführungsform weist das Monument untere, eventuell flexible Befestigungselemente zur Befestigung des Monuments an einer Bodenträgerstruktur in einem Boden der Kabine auf.

Gemäß einer Ausführungsform weist das Monument obere, eventuell flexible Befestigungselemente zur Befestigung an einer Seitenträgerstruktur oder Dachträgerstruktur der Kabine auf.

Gemäß einer Ausführungsform kann das Monument mit mehreren Befestigungselementen in der Kabine des Transportmittels befestigt sein. Beispielsweise mit einem oberen Befestigungselement an einer Befestigungsschiene für ein Staufach und einem unteren Befestigungselement an einer Sitzschiene. Durch das Vorsehen mehrerer flexibler Befestigungselemente kann eine flexible Positionierung des Monuments beim Einbau des Monuments vorgenommen werden, ohne dass die Befestigung des Monuments am Transportmittel weniger belastbar ist wie die Befestigung eines herkömmlichen Monuments.

Gemäß einer weiteren Ausführungsform der Erfindung umfasst das flexible Befestigungselement eine Befestigungsschiene. Diese Befestigungsschiene kann beispielsweise an der Oberseite des Monuments angebracht sein und eventuell nach dem Einbau parallel zur Transportmittelängsachse verlaufen. In der Befestigungsschiene können eine oder mehrere Klemmen angeordnet werden, die innerhalb der Befestigungsschiene verschiebbar sind. Befindet sich das Monument beim Einbau an der Zielposition, kann die Klammer an diejenige Position innerhalb der Befestigungsschiene geschoben wird, an der sie mit einer nicht-flexiblen Befestigungsstelle des Transportmittels mit der Kabine verbunden werden kann.

Gemäß einer Ausführungsform umfasst das Monument weiter Befestigungselemente zur Befestigung des Monuments an einem Boden der Kabine und eine Last verteilende Unterstruktur, wobei die Last verteilende Unterstruktur zur gleichmäßigen Verteilung von Kräften geeignet ist, die das Monument auf die Befestigungselemente und den Boden ausübt. Auf diese Weise kann das Monument an unterschiedlichen Stellen innerhalb der Kabine angeordnet oder aufgestellt werden, ohne dass der vom Monument belastete Bodenbereich speziell für das Monument vorbereitet wurde.

Gemäß einer Ausführungsform umfasst die Last verteilende Unterstruktur eine Bodenplatte, die zur Lastverteilung eine größere Grundfläche als das Monument aufweisen kann.

Gemäß einer Ausführungsform umfasst das Monument einen Transportwagen, einen Aufnahmebereich für den Transportwagen, wobei der Transportwagen in den Aufnahmebereich ein- und ausgefahren werden kann, wobei die Bodenplatte einen keilförmigen Abschnitt umfasst, der als Rampe für den Transportwagen in den Aufnahmebereich dient. Bei einem derartigen Monument kann an ein Küchenmonument bzw. Galley und einem oder mehreren Trolleys als Transportwagen gedacht werden. Durch die Rampe kann eine Bodenplatte von einer Dicke gewählt werden, die ohne die Rampe das Ein- und Ausfahren der Trolleys behindern würde, die aber durch ihre Dicke die Last optimal verteilt.

Gemäß der Erfindung umfasst das Monument wenigstens einen Versorgungsanschluss zum Verbinden des Monuments mit mindestens einem Bordsystem des Transportmittels, wobei der Versorgungsanschluss ein Monument-Anschlussende aufweist, das mit einem Transportmittel-Anschlussende des Bordsystems verbindbar ist, wobei das Monument-Anschlussende relativ zum Monument bewegbar ist.

Beim Einbau des Monuments muss das Transportmittel-Anschlussende nicht speziell an die Position des Monuments angepasst werden, indem etwa Leitungen oder Rohre verlegt werden, sondern das Monument-Anschlussende wird lediglich zum Transportmittel-Anschlussende hin bewegt und mit diesem verbunden. Das Monument kann dabei an verschiedenste Bordsysteme angebunden werden, zum Beispiel an ein Stromnetz, ein Brauchwassersystem, ein Abwassersystem oder an ein Datennetz (bei dem der Anschluss beispielsweise mittels Glasfasern erfolgen kann). Es handelt sich also um einen "flexiblen" Versorgungsanschluss.

Auch ist es möglich, dass mehrere Anschlüsse für verschiedene Bordsysteme in einem Standard-Anschluss integriert sind.

Bei einer Ausführungsform ist das Monument-Anschlussende in horizontaler Richtung bewegbar oder bei einem verbauten Monument in Richtung der Transportmittel-Längsachse bewegbar.

Gemäß einer Ausführungsform wird ein Monument für ein Transportmittel bereitgestellt, das wenigstens ein Verbindungselement zum Verbinden des Monuments mit dem Transportmittel umfasst, wobei das wenigstens eine Verbindungselement relativ zum Monument beweglich ist. Das Verbindungselement kann beispielsweise eine Klemme für eine Schiene oder auch ein Anschlussende zu einem Bordsystem des Transportmittels sein.

Gemäß einer Ausführungsform ist das Monument-Anschlussende mit dem Transportmittel-Anschlussende verbindbar, das zur Verbindung mit einem Staufach-Anschlussende geeignet ist. Bei derartig standardisierte Transportmittel-Anschlussenden entfallen gesonderte Anschlussende für Monumente und Staufächer.

Gemäß einer Ausführungsform ist der Versorgungsanschluss des Monuments seitlich an der Rückwand, das heißt der Wand, die zur Außenwand des Transportmittels hinweist bzw. hinweisen soll, angeordnet.

Gemäß einer weiteren Ausführungsform umfasst das Monument eine Induktionsschleife, über die mit einer Induktionsschleife des Transportmittels das Monument mit Strom versorgt werden kann.

Beispielsweise kann unter dem Boden der Kabine des Transportmittels eine Kette von Induktionsschleifen angeordnet sein, die auch dafür geeignet sind, im Transportmittel befestigte Sitze mit Strom zu versorgen.

Die Erfindung betrifft auch ein Einbausystem zum Einbau in ein Transportmittel, das ein erfindungsgemäßes Monument umfasst.

Gemäß einer Ausführungsform umfasst das Einbausystem wenigstens zwei Staufächer, deren Erstreckung in Transportmittel-Längsrichtung sich voneinander unterscheiden. Die beiden Staufächer weisen eine unterschiedliche Länge auf.
Gemäß einer Ausführungsform umfasst das Einbausystem ein Staufach, dessen Erstreckung in Transportmittel-Längsrichtung einstellbar ist. Die Länge des Staufachs kann variiert werden.

Bei dem gleichzeitigen Einbau von Staufächern und Monumenten in die Kabine kann das Problem entstehen, dass zwischen Staufächern von einheitlicher Länge und einem Monument eine Lücke entsteht. Diese Lücke kann durch ein Staufach anderer Länge, etwa aus einem Baukasten verschieden langer Staufächer, oder durch ein Staufach mit variabler Länge ausgeglichen werden. Ein Staufach, dessen Erstreckung in Transportmittel-Längsrichtung einstellbar ist, bzw. ein Staufach von variabler Länge kann ein Staufach aus zwei Elementen sein, die teleskopartig ineinander schiebbar sind.

Gemäß einer Ausführungsform kann an einem Staufach ein OLED angebracht sein. Beispielsweise kann ein OLED bei einem Überkopf-Staufach zur Beleuchtung der Passagiersitze darunter verwendet werden.

Gemäß einer Ausführungsform kann an jedem der Elemente eines Teleskop-Staufachs ein OLED angebracht sein. Beim Zusammenschieben der Elemente überschneiden oder überlappen sich die OLEDs. Das eine OLED verschwindet hinter dem anderen OLED. So kann erreicht werden, dass am Teleskop-Staufach eine im Wesentlichen durchgängige Beleuchtung von einem Ende des Staufachs bis zum anderen Ende angebracht ist.

Gemäß einer Ausführungsform kann an einem Teleskop-Staufach ein durchgängiges flexibles OLED angebracht sein. Beim Zusammenschieben der beiden Elemente des Staufachs kann das durchgängige flexible OLED entweder zusammengefaltet oder eingerollt werden. Das durchgängige OLED kann auf diese Weise so verkürzt bzw. verlängert werden, dass es von einem Ende des Teleskop-Staufachs bis zum anderen Ende reicht.

Gemäß einer Ausführungsform umfasst das Einbausystem ein Monument und ein Staufach, die mit der gleichen Befestigungsstruktur der Kabine verbindbar bzw. an der Kabine befestigbar sind und/oder die an die gleichen Transportmittel-Anschlussenden anschließbar sind.

Gemäß einer Ausführungsform umfasst das Einbausystem ein Ausgleichselement, das dazu geeignet ist, einen zwischen dem Monument und einer Seitenverkleidung des Transportmittels entstehenden Hohlraum zumindest teilweise auszufüllen. Beispielsweise kann das Monument nicht direkt anschließend an der Seitenverkleidung des Transportmittels positioniert sein, da die Seitenverkleidung gekrümmt ist, oder sich eine Fensteröffnung in der Seitenverkleidung befindet, die durch das Monument nicht vollständig verdeckt werden soll. Ein Ausgleichselement kann dann den entstehenden Hohlraum verkleinern, um so beispielsweise zu verhindern, dass Schmutz oder Gegenstände hinter das Monument fallen.

Gemäß einer Ausführungsform umfasst das Einbausystem eine Deckenverkleidung für eine Kabine des Transportmittels, wobei die Deckenverkleidung über erste Befestigungselemente mit der Kabine verbindbar ist, wobei das Monument über zweite Befestigungselemente der Kabine verbindbar ist. Um den Ein- und Ausbau von Monumenten zu erleichtern, wird die Deckenverkleidung gesondert von den Monumenten in der Kabine angebracht. Die Deckenverkleidung und das Monument sind nicht direkt miteinander verbunden. Die Monumente können ein- und ausgebaut werden, ohne dass die Deckenverkleidung entfernt werden muss.

Gemäß einer Ausführungsform begrenzt das Monument die Kabine zwischen einem Boden der Kabine und der Deckenverkleidung. Dadurch, dass das Monument den Raum zwischen dem Boden der Kabine und der Deckenverkleidung im Wesentlichen ausfüllt, entstehen keine Lücken, durch die die Wandkonstruktion der Kabine sichtbar ist und die durch gesonderte Blenden oder Verkleidungselemente verdeckt werden müssen.

Gemäß einer Ausführungsform umfasst das Einbausystem eine Seitenverkleidung für die Kabine des Transportmittels, wobei die Seitenverkleidung zwischen dem Boden der Kabine und der Deckenverkleidung die Kabine begrenzen kann, wobei das Monument und die Seitenverkleidung an gleichen Befestigungsstellen in der Kabine des Transportmittels anbringbar sind. Die Seitenverkleidung und die Deckenverkleidung sind nicht direkt miteinander verbunden.

Um das Umrüsten des Transportmittels zu erleichtern, umfasst das Einbausystem Seitenverkleidungen, die leicht gegen das Monument ausgetauscht werden können. Wenn die Seitenverkleidung genauso wie das Monument den Wandabschnitt der Kabine zwischen dem Boden und der Deckenverkleidung vollständig überdecken soll, weisen das Monument und die Seitenverkleidung die gleiche Höhe auf.

Diese Erfindung betrifft auch ein Transportmittel, insbesondere ein Luftfahrzeug oder ein Flugzeug, mit einem erfindungsgemäßen Monument bzw. einem erfindungsgemäßen Einbausystem.

Diese Erfindung betrifft auch ein Staufach, das gemäß einer Ausführungsform an einer Befestigungsschiene für ein Monument befestigbar ist.

Gemäß einer Ausführungsform umfasst das Staufach ein Staufach-Anschlussende zum Verbinden des Staufachs mit wenigstens einem Bordsystem des Transportmittels, das mit einem Transportmittel-Anschlussende verbindbar ist, das auch zum Verbinden mit einem Monument-Anschlussende geeignet ist.

Gemäß einer Ausführungsform ist die Erstreckung des Staufachs in Transportmittel-Längsrichtung einstellbar.

Gemäß einer Ausführungsform umfasst das Staufach zwei teleskopartig ineinander schiebbare Elemente.

Die vorliegende Erfindung wird nachfolgend mit Bezug auf die beiliegenden Figuren anhand bevorzugter Ausführungsformen detailliert beschrieben.

### Kurze Beschreibung der Figuren

Fig. 1 zeigt eine perspektivische Ansicht einer Flugzeugkabine mit einem Toilettenmonument gemäß einem Ausführungsbeispiel der Erfindung mit zwei flexiblen Befestigungselementen an der Oberseite.
Fig. 2 zeigt eine perspektivische Ansicht einer Flugzeugkabine mit einem Küchenmonument gemäß einem Ausführungsbeispiel der Erfindung, das auf einer Bodenplatte befestigbar ist.
Fig. 3a zeigt eine perspektivische Ansicht einer Flugzeugkabine mit einem Küchenmonument mit Bodenplatte gemäß einem Ausführungsbeispiel der Erfindung.
Fig. 3b zeigt eine perspektivische Ansicht einer Flugzeugkabine mit einem Küchenmonument mit Bodenplatte gemäß einem Ausführungsbeispiel der Erfindung.
Fig. 4a zeigt eine perspektivische Ansicht einer Flugzeugkabine mit einem Monument gemäß einem Ausführungsbeispiel der Erfindung, das einen Versorgungsanschluss mit einem beweglichen Anschlussende aufweist.
Fig. 4b zeigt eine perspektivische Ansicht einer Flugzeugkabine mit einem Monument gemäß einem Ausführungsbeispiel der Erfindung mit einem flexiblen Befestigungselement an der Oberseite und einem Versorgungsanschluss mit beweglichem Anschlussende.
Fig. 5 zeigt einen Querschnitt durch eine Flugzeugkabine mit einem Monument gemäß einem Ausführungsbeispiel der Erfindung, dessen Stromversorgung über eine Induktionsschleife erfolgt.
Fig. 6 zeigt eine perspektivische Ansicht einer Flugzeugkabine mit einem Monument gemäß einem Ausführungsbeispiel der Erfindung, das mit einer Befestigungsschiene für ein Staufach verbindbar ist;
Fig. 7a zeigt eine perspektivische Ansicht einer Flugzeugkabine mit einem Monument gemäß einem Ausführungsbeispiel der Erfindung, das mit einem Transportmittel-Anschlussende verbindbar ist, das auch zur Verbindung mit einem Staufach-Anschlussende geeignet ist;
Fig. 7b zeigt eine perspektivische Ansicht einer Flugzeugkabine mit einem Staufach, das ein Anschlussende aufweist, das mit dem gleichen Transportmittel-Anschlussende verbindbar ist, für ein Einbausystem gemäß einem Ausführungsbeispiel der Erfindung.
Fig. 8a zeigt eine perspektivische Ansicht einer Flugzeugkabine mit zwei Staufächern unterschiedlicher Länge, für ein Einbausystem gemäß einem Ausführungsbeispiel der Erfindung.
Fig. 8b zeigt eine perspektivische Ansicht einer Flugzeugkabine mit einem teleskopartig zusammenschiebbaren Staufach für ein Einbausystem gemäß einem Ausführungsbeispiel der Erfindung.
Fig. 9a und 9b zeigen einen Längsschnitt durch ein teleskopartig zusammenschiebbares Staufach für ein Einbausystem gemäß einem Ausführungsbeispiel der Erfindung
Fig. 9c und 9d zeigen einen Längsschnitt durch ein teleskopartig zusammenschiebbares Staufach für ein Einbausystem gemäß einem Ausführungsbeispiel der Erfindung.
Fig. 9e und 9f zeigen einen Längsschnitt durch ein teleskopartig zusammenschiebbares Staufach für ein Einbausystem gemäß einem Ausführungsbeispiel der Erfindung.
Fig. 10 zeigt eine perspektivische Ansicht einer Flugzeugkabine mit einem Monument und einem Ausgleichselements für ein Einbausystem gemäß einem Ausführungsbeispiel der Erfindung.
Fig. 11a zeigt einen Querschnitt durch eine Flugzeugkabine mit einem Einbausystem gemäß einem Ausführungsbeispiel der Erfindung aus einer Deckenverkleidung und einem Staufach;
Fig. 11b zeigt einen Querschnitt durch eine Flugzeugkabine mit einem Einbausystem gemäß einem Ausführungsbeispiel der Erfindung aus einer Deckenverkleidung und einem Monument.
Fig. 11c zeigt einen Querschnitt durch eine Flugzeugkabine mit einem Einbausystem gemäß einem Ausführungsbeispiel der Erfindung aus einer Deckenverkleidung und einer Seitenverkleidung.
Fig. 12 zeigt ein Luftfahrzeug mit einem Monument gemäß einem Ausführungsbeispiel der Erfindung.

### Detaillierte Beschreibung von Ausführungsbeispielen

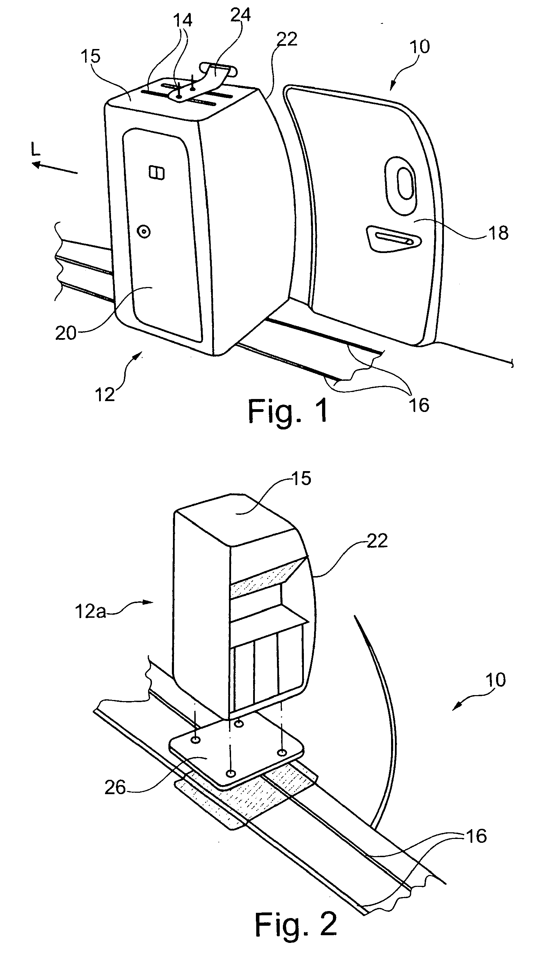

Fig. 1 zeigt eine perspektivische Ansicht eines Ausschnitts aus dem Innenraum einer Kabine 10 eines Flugzeugs. Ein Monument 12 ist an zwei oberen Befestigungsschienen 14 als Befestigungselemente und an zwei Sitzschienen 16 mit weiteren Befestigungselementen neben einer Tür 18 in der Kabine 10 befestigt. Die Sitzschienen 16 sind im Boden 17 der Kabine 10 verlegt und mit dem Rumpf des Flugzeugs verbunden.

Bei dem Monument 12 handelt es sich um ein Toilettenmonument, das durch eine Tür 20 betreten werden kann und dessen Rückwand 22 derart an die Krümmung der Kabinenwand angepasst ist, dass dahinter kein Hohlraum entsteht. In den Schienen 14 an der Oberseite 15 des Monuments 12 befinden sich Klemmen, die beispielsweise mittels Schrauben an einem starr mit der Trägerstruktur des Flugzeugs verbundenen Tragelement 24 festgeschraubt sind. Die Befestigungsschienen 14 bilden ein flexibles Befestigungselement für das Monument 12, da der Befestigungspunkt des Monuments 12 durch Verschieben der Klemmen variabel oder flexibel ist.

Das Monument 12 kann in einem Bereich von Relativpositionen in FlugzeugLängsrichtung L an der Kabine 10 befestigt werden. Der Bereich ist durch die Länge der Schienen 14 begrenzt. Soll das Monument 12 etwa versetzt zur dargestellten Relativposition mit der Kabine befestigt werden, müssen lediglich die Schrauben, die das Monument mit den Sitzschienen 16 und dem Trägerelement 24 verbinden, gelöst werden, dann das Monument 12 an die neue Position verschoben werden und anschließend das Monument 12 wieder mit den Sitzschienen 16 und dem Trägerelement 24 verschraubt werden.

Fig. 2 zeigt eine weitere Ausführung eines Monuments 12a, das über eine Bodenplatte 26 mit den Sitzschienen 16 verbindbar ist. An seiner Oberseite 15 kann das Monument 12a genauso wie das Monument 12 aus der Fig. 1 mit der Kabine verbunden sein.

Durch die Bodenplatte 26 kann das Monument 12a an beliebiger Stelle innerhalb der Kabine mit den Sitzschienen 16 verschraubt werden. Die Bodenplatte 26 verteilt das Gewicht des Monuments 12a derart, dass auf eine gesonderte Stützstruktur für das Monument 12a im Boden 17 der Kabine 10 neben der Stützstruktur für den Boden 17 verzichtet werden kann.

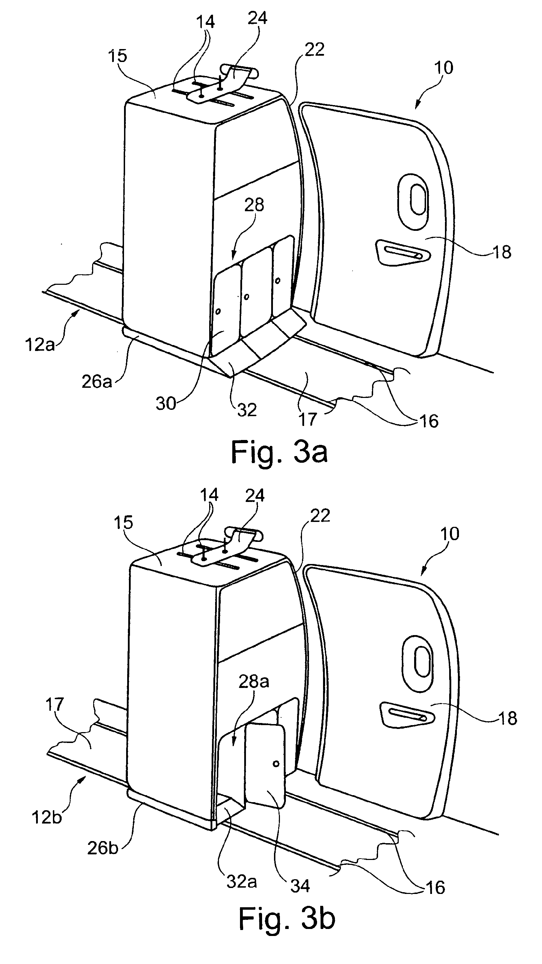

Fig. 3a zeigt das Monument 12a aus der Fig. 2 mit einer alternativen Ausführungsform einer Bodenplatte 26a, bei dem es sich beispielsweise um ein Küchenmonument, das heißt ein sogenanntes Galley, handeln kann. In dem Monument 12a befinden sich drei Aufnahmebereiche 28 für jeweils einen Transportwagen 30. Über einen keilförmigen Abschnitt 32 der Bodenplatte 26a können die Transportwagen 30 in die Aufnahmebereiche 28 ein- und ausgefahren werden.

Fig. 3b zeigt eine weitere Ausführungsform eines Monuments 12b mit integrierter Bodenplatte 26b. Die Bodenplatte 26b stellt gleichzeitig den Boden der Aufnahme 28a bereit. Die Aufnahme 28a weist eine Türe 34 auf, die geöffnet dargestellt ist, so dass in das Innere der Aufnahme 28a gesehen werden kann. Im Gegensatz zu der Ausführungsform der Fig. 3a, ist der als Rampe dienende keilförmige Abschnitt 32a der Bodenplatte 26b innerhalb der Aufnahme 28a angeordnet. Die Bodenplatte 26b weist dieselbe Grundfläche wie das Monument 12b auf.

Bei der in der Fig. 3A gezeigten Ausführungsform der Bodenplatte 26a ragt der keilförmige Abschnitt 32 über die Grundfläche des Monuments 12a hinaus. Die Bodenplatte 26a besitzt daher eine größere Ausdehnung als die Grundfläche des Monuments 12a.

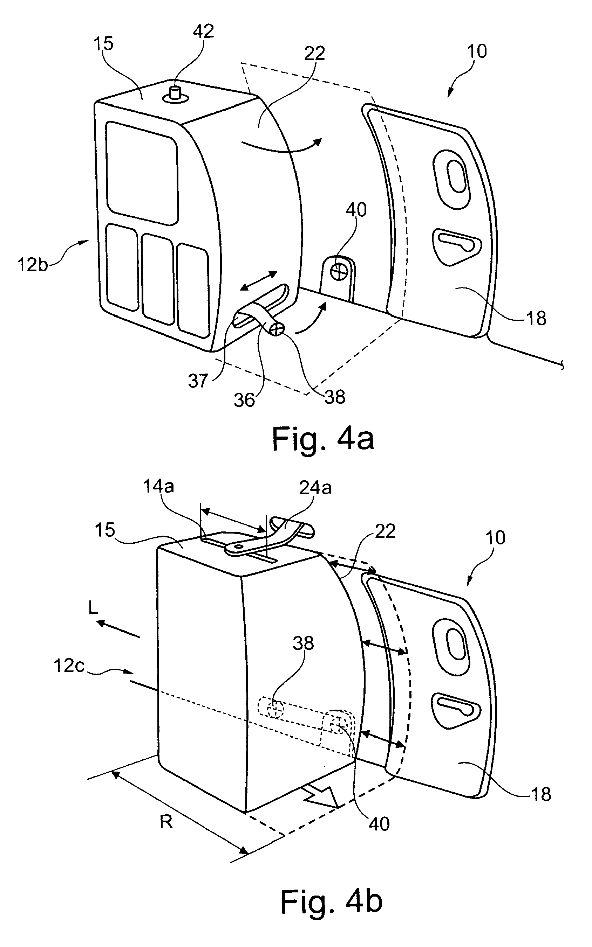

Fig. 4a zeigt das erfindungsgemäβe Monuments 12b mit einem Versorgungsanschluss 36, dessen Anschlussende 38 relativ zum Monument bewegbar ist. Bei der hier dargestellten Ausführungsform des Monuments 12b ist das Anschlussende 38 in horizontaler Richtung bewegbar. Beispielsweise umfasst der Versorgungsanschluss 36 mehrere Schläuche, die im Inneren des Monuments derart beweglich angeordnet sind, dass das Anschlussende 38 erfindungsemäβ entlang der Öffnung 37 verschoben werden kann. Das Anschlussende 38 ist über ein Anschlussende 40 mit einem Bordsystem oder mehreren Bordsystemen des Flugzeugs verbindbar. Bei dem Monument 12b könnte es sich um ein Küchenmonument handeln, das über den Versorgungsanschluss 36 mit Heiß- und Kaltwasser versorgt wird, und bei dem Grauwasser über den Versorgungsanschluss 36 zurück zum Abwassersystem des Flugzeugs geleitet werden kann.

Das in der Fig. 4a dargestellte Monument 12b weist an seiner Oberseite ein Befestigungselement 42 auf. Das Monument kann genauso wie eines der vorhergehenden Monumente mittels der Sitzschienen 16 mit dem Flugzeug verbunden werden.

Fig. 4b zeigt eine weitere Ausführungsform eines Monuments 12c mit einer einzelnen Befestigungsschiene 14a an seiner Oberseite 15. Die Befestigungsschiene 14a kann beispielsweise mit der Hilfe einer in ihr befindlichen Klemme an einem Trägerelement 24a, das starr mit dem Rumpf des Flugzeugs verbunden ist, befestigt werden. Das Monument 12c weist weiter einen Versorgungsanschluss mit einem Anschlussende 38 auf, das in horizontaler Richtung relativ zum Monument bewegt werden kann und das mit einem Anschlussende 40 mit wenigstens einem Bordsystem des Flugzeugs verbunden werden kann.

In der Fig. 4b wird dargestellt, dass das Monument 12c an einem Bereich von Relativpositionen R innerhalb der Kabine 10 befestigt werden kann. Dazu müssen lediglich die Klemmen in der Schiene 14a und nicht dargestellte Befestigungselemente mit dem Boden, beispielsweise mit Sitzschienen, gelöst werden. Mit gelösten Befestigungselementen kann das Element 12c innerhalb des Bereichs R verschoben werden. Der Bereich R ist durch die Länge der Befestigungsschiene 14a und dem möglichen Bewegungsbereich des Anschlussendes 38 begrenzt. Obwohl das Anschlussende 40 des Flugzeugs an einer fixierten Stelle innerhalb der Kabine angeordnet ist, ist es nicht notwendig, Leitungen oder Rohre zum Monument 12c zu verlegen, da das Anschlussende 38 relativ zum Monument 12c verschoben werden kann.

Das Monument 12c kann aus der dargestellten Mittelposition bis zu 30 cm in Richtung L der Flugzeuglängsachse verschoben werden, ohne dass eine Verlängerung vom Anschlussende 40 zum beweglichen Ende 38 notwendig wird.

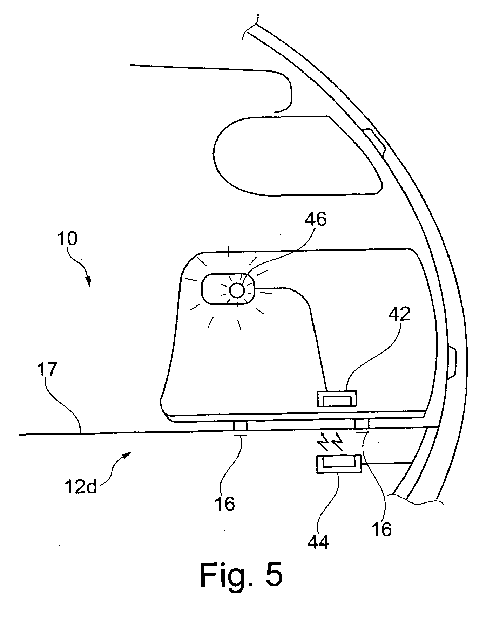

Fig. 5 zeigt schematisch, wie eine Ausführungsform eines Monuments 12d mit Hilfe von Induktionsschleifen 42, 44 mit Strom versorgt werden kann. Unterhalb des Bodens 17 der Kabine 10 ist eine erste Induktionsschleife 44 angeordnet, die mit dem Stromversorgungssystem des Flugzeugs verbunden ist. Innerhalb des Monuments 12d befindet sich eine zweite Induktionsschleife 42, in der mittels des Induktionsprinzips durch die erste Induktionsschleife 44 Strom induziert wird, der einem Verbraucher 46, etwa einer Lampe, zugeführt werden kann.

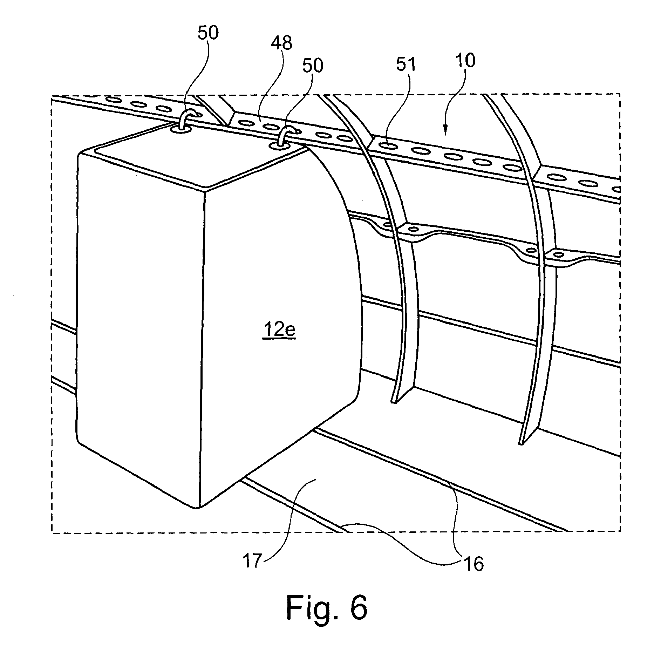

Die Fig. 6 zeigt eine weitere Ausführungsform eines Monuments 12e, das einerseits mittels der Sitzschienen 16 am Boden der Kabine 10 befestigt ist und andererseits Befestigungselemente 50 aufweist, die an einer Befestigungsschiene 48 für ein Staufach befestigt werden können. Die Befestigungselemente 50 können dabei in längliche Öffnungen 51 der Befestigungsschiene 48 befestigt werden.

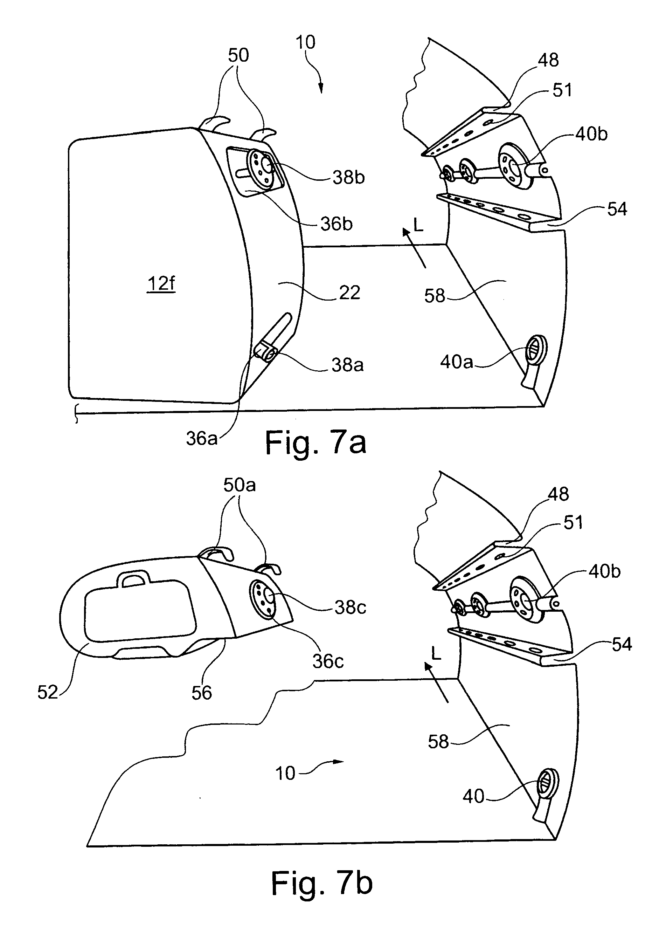

Die Fig. 7a zeigt eine weitere Ausführungsform eines Monuments 12f, das Befestigungselemente 50, einen ersten Versorgungsanschluss 36a und einen zweiten Versorgungsanschluss 36b aufweist. Die Befestigungselemente 50 sind mit einer Befestigungsschiene 48 für Staufächer verbindbar. Der erste Versorgungsanschluss 36a weist ein Anschlussende 38a auf, das mit einem Anschlussende 40a des Flugzeugs verbindbar ist. Bei dem Versorgungsanschluss 36a könnte es sich beispielsweise um mehrere Rohre oder Schläuche handeln, mit denen das Monument 12f mit Brauchwasser versorgt werden kann und mit denen im Monument 12f erzeugtes Grau- oder Schwarzwasser wieder ins Flugzeug zurück geleitet werden kann.

Der zweite Versorgungsanschluss 36b weist ein Anschlussende 38b auf, das über ein Anschlussende 40b des Flugzeugs mit weiteren Bordsystemen verbunden werden kann. Beispielsweise könnten in den Versorgungsanschluss 36b die Stromversorgung des Monuments 12f und eine Datennetzwerkverbindung integriert sein. Die Anschlussenden 36a und 36b sind in horizontaler Richtung relativ zum Monument 12f bewegbar. Soll das Monument 12f mit der Kabine 10 verbunden werden, wird das Monument 12f zuerst grob an seine Zielposition geschoben. Dann werden die Anschlussenden 38a und 38b mit den korrespondierenden Anschlussenden 40a und 40b verbunden. Anschließend kann das Monument 12f genau an seine Zielposition verschoben werden, wobei sich die nun fest mit den Anschlussenden 40a und 40b verbundenen Anschlussenden 38a und 38b des Monuments 12f relativ zum Monument 12f bewegen. Abschließend werden die Befestigungselemente 50 mit der Befestigungsschiene 48 verbunden, beispielsweise indem sie mittels Schrauben durch die länglichen Öffnungen 51 an Befestigungsschiene 48 angeschraubt werden.

Die Fig. 7b zeigt eine Ausführungsform eines Staufachs 52 in der Form einer Gepäckablage. Das Staufach 52 weist einen Versorgungsanschluss 36c mit Anschlussende 38c auf, das unbeweglich mit dem Staufach 52 verbunden ist. Mittels der hakenförmigen Befestigungselemente 50a kann das Staufach 52 in die länglichen Öffnungen 51 in der Befestigungsschiene 48 eingehängt werden. Dabei kann gleichzeitig in einem Arbeitsschritt das Anschlussende 38c mit dem Anschlussende 40b verbunden werden. Das Staufach 52 stützt sich in der befestigten Position mit dem hinteren Abschnitt 56 auf der Befestigungsschiene 54 ab.

Wie in den Fig. 7a und 7b zu erkennen ist, sind in der Seitenwand 58 der Kabine 10 eine Mehrzahl von Anschlussenden 40b angebracht. In der Regel ist für jedes Staufach 52 ein Anschlussende 40b vorgesehen. Die Anschlussenden 40b sind in gleichen Abständen in Richtung der Längsrichtung L des Flugzeugs angeordnet. Die Anschlussenden 40b weisen einen Abstand auf, der durch die Länge von aufeinander folgend angeordneten Staufächer 52 bestimmt ist. Obwohl die Lage der Staufächer 52 durch die Lage der Anschlussenden 40b festgelegt ist, kann die Position des Monuments 12f bezüglich einer Längsrichtung L des Flugzeugs frei gewählt, wenn die horizontale Beweglichkeit der Anschlussenden 36a und 36b größer als der Abstand der Anschlussenden 40b ist.

In den Fig. 7a und 7b ist ein Einbausystem für ein Flugzeug dargestellt, das eines oder mehrere der Monumente 12f und eines oder mehrere der Staufächer 52 umfasst.

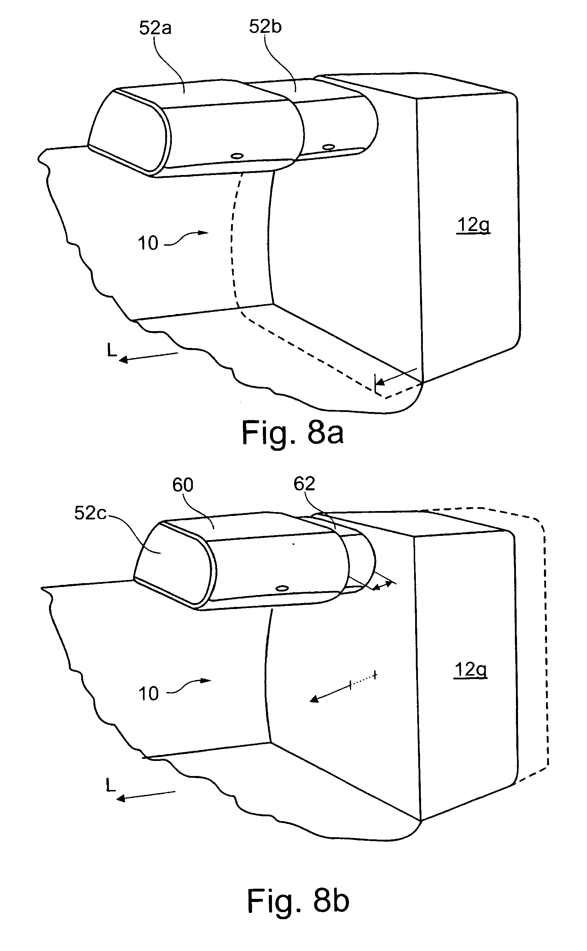

Die Fig. 8a zeigt ein weiteres Einbausystem für ein Flugzeug, das das Monument 12g und zwei Staufächern 52a und 52b umfasst.

Das Monument 12g kann wie eines der Monumente 12a bis 12f an der Kabine 10 befestigt und mit den Bordsystemen des Flugzeugs verbunden sein. Auch die Staufächer 52a und 52b können wie das Staufach 52 an einer Befestigungsschiene 48 an der Kabine befestigt sein und einen Versorgungsanschluss 36c aufweisen. Die Staufächer 52a und 52b weisen eine unterschiedliche Länge in Richtung Lder Flugzeuglängsachse auf. Auf diese Weise kann vermieden werden, dass, wenn das Monument 12g in einem Abstand zum Staufach 52a angeordnet wird, der kürzer ist als die Länge des Staufachs 52a, eine Lücke entsteht. Zum Schließen unterschiedlich langer Lücken sind Staufächer 52b unterschiedlicher Längen vorgesehen.

In der Fig. 8b ist ein Staufach 52c dargestellt, das zwei teleskopartig ineinander schiebbare Elemente 60 und 62 umfasst. Wird anstelle des Staufachs 52a ein Staufach 52c verwendet, kann eine Lücke, die zwischen dem Staufach 52a und dem Monument 12g entstehen würde, geschlossen werden, in dem das Element 62 aus dem Element 60 herausgezogen wird. Dies kann beispielsweise mit Hilfe von pneumatischen Federn automatisch bewerkstelligt werden.

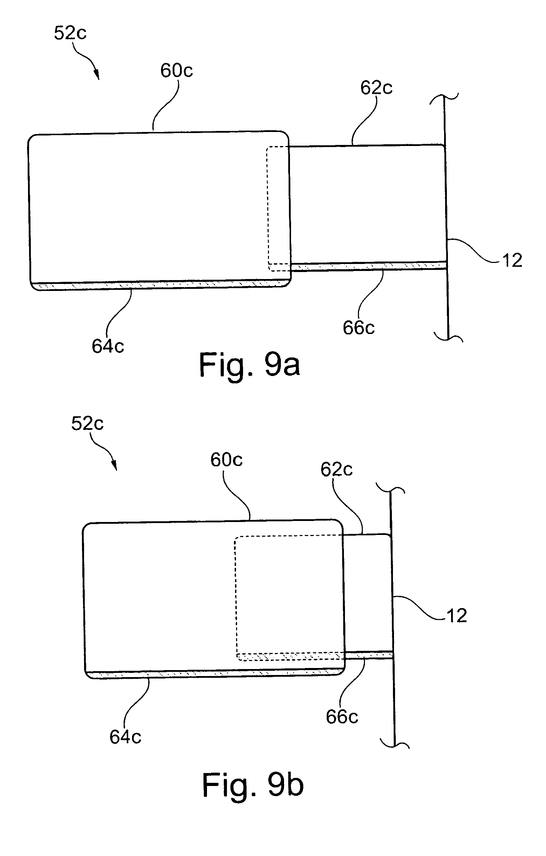

Die Fig. 9a zeigt das Staufach 52c im Querschnitt, das die beiden Elemente 60c und 62c umfasst. Das Element 62c kann in das Element 60c geschoben werden. An den beiden teleskopartig ineinander verschiebbaren Elementen 60c und 62c ist an deren Unterseite jeweils ein OLED 64c, 66c befestigt. Das Element 62c kann an einer Seite an einem Monument 12 abgestützt sein.

Die Fig. 9b zeigt das Staufach 52c, bei dem die Elemente weiter ineinandergeschoben sind als bei der Fig. 9a. Das OLED 66c ist dabei zum Teil in das Innere des Elements 64c geschoben. Die OLEDs 64c und 66c überlappen sich.

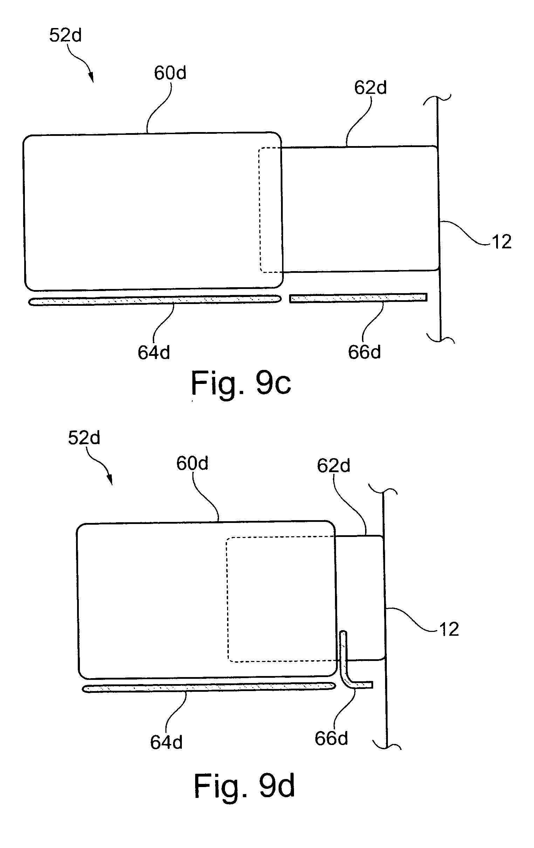

Die Fig. 9c und 9d zeigen ein teleskopartig zusammenschiebbares Staufach 52d das im Wesentlichen wie das Staufach aus den Fig. 9a und 9b aufgebaut ist. Das OLED 66d ist flächenbündig zum OLED 64d bzw. auf der gleichen Höhe wie dieses angebracht. Beim Zusammenschieben wird das OLED 66d zusammengefaltet und wandert parallel zur Seitenfläche 61 d des Elements 60d in das Element 62d hinein.

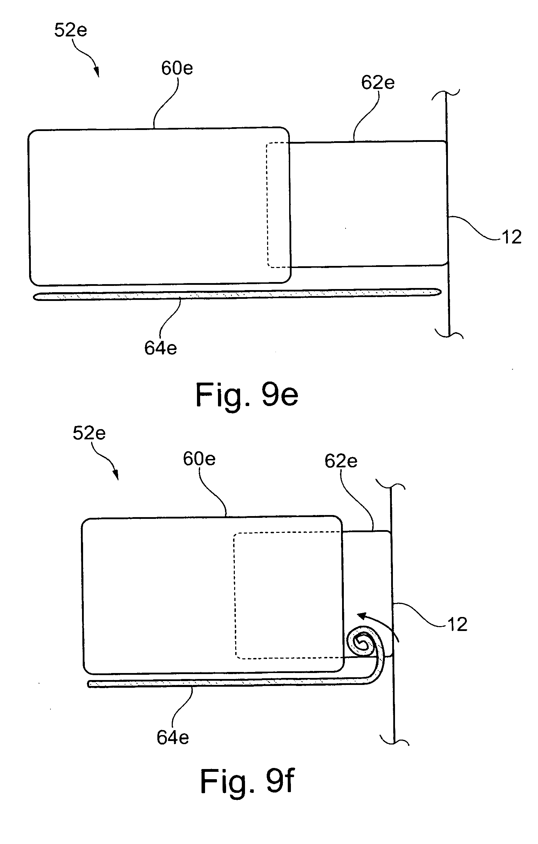

Die Fig. 9e und 9f zeigen ein teleskopartig zusammenschiebbares Staufach 52e das im Wesentlichen wie die Staufächer aus den Fig. 9a bis 9d aufgebaut ist. Im Gegensatz zu den Staufächern aus den Fig. 9a bis 9d weist das Staufach 52 ein einzelnes OLED 64e auf, das am Element 60e angebracht ist. Beim Zusammenschieben der Elemente 60e und 62e wird das OLED 64e in das Innere des Elements 62e eingerollt.

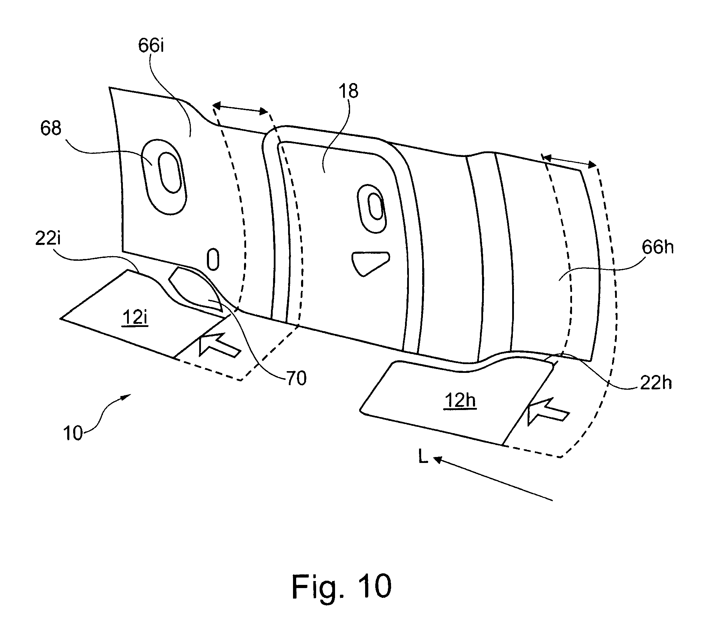

Die Fig. 10 zeigt einen Abschnitt einer Kabine 10 eines Flugzeugs. In der Kabine 10 befinden sich zwei Monumente 12h und 12i, von denen lediglich die Grundfläche dargestellt ist. Die Monumente 12h und 12i können genauso wie eines der Monumente 12a bis 12f mit der Kabine und/oder den Bordsystemen des Flugzeugs verbunden sein. Das Monument 12h weist eine Rückwand 22h auf, die derart gekrümmt ist, dass zwischen der Rückwand 22h und der Seitenverkleidung 66h bei der in der Fig. 10 gezeigten Anordnungsposition des Monuments 12h kein großer Hohlraum zwischen der Rückwand 22h des Monuments 12h und der Seitenverkleidung 66h der Flugzeugkabine 10 entsteht. Wird das Monument 12h entgegen des Pfeils L für die Flugzeuglängsrichtung verschoben, besteht zwischen Monument 12h und Seitenverkleidung 66h ein Hohlraum, der von außen nicht einsehbar ist.

Auch das Monument 12i weist eine Rückwand 22i auf, die derart gekrümmt ist, dass in einer bestimmten Position des Monuments 12i zwischen der Rückwand 22i und der Seitenwand 66i im Wesentlichen kein Hohlraum entsteht. In der in der Fig. 10 dargestellten Position ist das Monument 12i jedoch so angeordnet, dass ein Fenster 68 in der Seitenwand 66i vom Monument 12i nicht verdeckt wird. Daher entsteht zwischen dem Monument 12i und der Seitenverkleidung 66i ein Hohlraum. Dieser Hohlraum kann durch ein Ausgleichselement 70 bis zum Fenster 68 verschlossen werden. Auch vom Ausgleichselement 70 ist in der Fig. 10 lediglich die Grundfläche dargestellt.

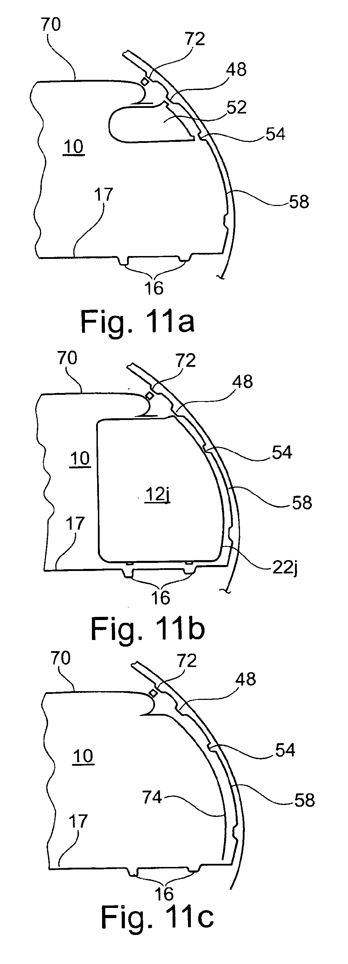

Die Fig. 11a stellt einen Querschnitt durch eine Kabine 10 eines Flugzeugs dar. Die Kabine ist von unten durch einen Boden 17 begrenzt, in dem Sitzschienen 16 befestigt sind. Seitlich ist die Kabine 10 durch eine Seitenwand 58 begrenzt, an der sich Befestigungsschienen 48, 54 befinden, an denen ein Staufach 52 befestigt ist, etwa so, wie es in der Fig. 7b gezeigt ist. Die Kabine 10 ist oben durch eine Deckenverkleidung 70 begrenzt, die über eigene Befestigungselemente 72 mit der Seitenwand 58 der Kabine verbunden ist. Das Staufach 52 kann von der Wand 58 genommen werden, ohne dass die Deckenverkleidung 70 entfernt werden muss.

In der Fig. 11b ist ein zur Fig. 11a analoger Querschnitt durch eine Kabine 10 eines Flugzeugs dargestellt. Anstelle des Staufachs 52 ist ein Monument 12j mit der Kabine 10 verbunden. Dies könnte wie in den vorhergehenden Figuren dargestellt, mittels der Befestigungsschiene 48 und den Sitzschienen 16 erfolgen. Das Monument 12j kann in der Kabine befestigt werden, ohne dass die Deckenverkleidung 70 gelöst werden muss, da das Monument 12j und die Deckenverkleidung 70 über eigene gesonderte Befestigungselemente 48, 72 mit der Wand 58 verfügen. Zusätzlich füllt das Monument 12j den Raum zwischen dem Boden 17 und der Deckenverkleidung 70 aus, so dass keine größeren Lücken entstehen, durch die die Wand 58 der Kabine 10 sichtbar wäre. Auf diese Weise werden weitere Verkleidungselemente vermieden.

Die Fig. 11c zeigt einen Querschnitt durch eine Kabine 10 eines Flugzeugs analog den Fig. 11a und 11b. Statt des Monuments 12j ist eine Seitenverkleidung 74 mit der Wand 58 der Kabine 10 verbunden. Dies könnte beispielsweise, wie in der Fig. 11 angedeutet, über die Befestigungsschiene 54 oder aber auch über die Befestigungsschiene 48 erfolgen. Genauso wie das Monument 12j läuft die Seitenverkleidung 74 vom Boden 17 der Kabine 10 bis zur Deckenverkleidung 70.

Das in den Fig. 11a bis 11c dargestellte Einbausystem ermöglicht es, nach Belieben Staufächer 52, Monumente 12j und Seitenverkleidungen 74 auszutauschen, ohne dass die Deckenverkleidung 70 abgenommen werden müsste.

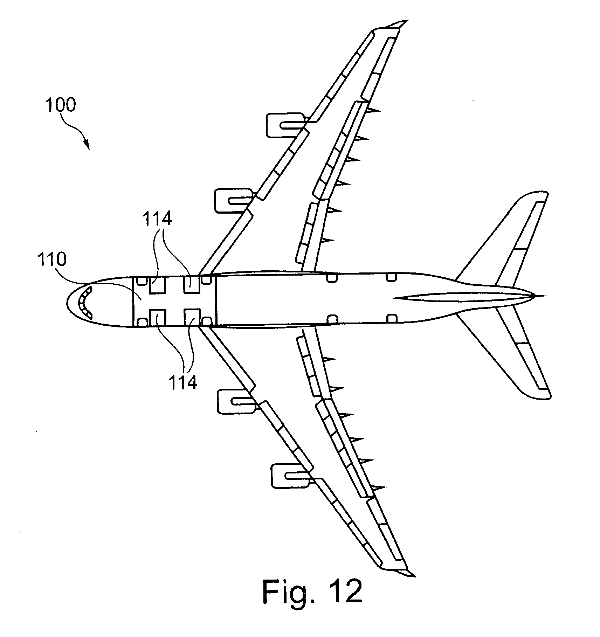

Fig. 12 zeigt eine schematische Aufsicht auf ein Flugzeug 100 mit mehreren Monumenten 14, die in einer Kabine 110 befestigt sind.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Monument (12) für eine Kabine (10) eines Transportmittels, umfassend:
ein Befestigungselement zur Befestigung des Monuments (12) an der Kabine (10) des Transportmittels,
wenigstens einen Versorgungsanschluss (36, 36a, 36b) zum Verbinden des Monuments mit wenigstens einem Bordsystem des Transportmittels,
wobei das Befestigungselement derart ausgeführt ist, dass die Befestigung des Monuments (12) in einem Bereich von Relativpositionen (R) des Monuments (12) zur Kabine (10) des Transportmittels vornehmbar ist.
wobei das Befestigungselement mit einer Sitzschiene (16) des Transportmittels verbindbar ist,
wobei der Versorgungsanschluss ein Monument-Anschlussende (38, 38a, 38b) aufweist, das mit einem Transportmittel-Anschlussende (40, 40a, 40b) des Bordsystems verbindbar ist,
wobei das Monument-Anschlussende (38, 38a, 38b) relativ zum Monument bewegbar ist, indem das Monument-Anschlussende entlang einer Öffnung des Monuments verschoben werden kann.

2. Monument (12f) nach Anspruch 1, wobei das Befestigungselement mit einer Befestigungsschiene (48) für ein Staufach (52) verbindbar ist.

3. Monument (12) nach einem der vorhergehenden Ansprüche, wobei das Befestigungselement eine Befestigungsschiene (14) umfasst.

4. Monument (12a, 12b) nach einem der vorhergehenden Ansprüche, weiter umfassend:
Befestigungselemente zur Befestigung des Monuments an einem Boden (17) der Kabine, und
eine Last verteilende Unterstruktur (26a, 26b),
wobei die Last verteilende Unterstruktur (26a, 26b) zur gleichmäßigen Verteilung von Kräften geeignet ist, die das Monument auf die Befestigungselemente und den Boden (17) ausübt.

5. Monument (12a, 12b) nach Anspruch 4, weiter umfassend:
einen Transportwagen (30),
einen Aufnahmebereich (28) für den Transportwagen,
wobei der Transportwagen in den Aufnahmebereich ein- und ausgefahren werden kann,
wobei die Last verteilende Unterstruktur eine Bodenplatte (26a, 26b) umfasst, und
wobei die Bodenplatte (26a, 26b) einen keilförmiger Abschnitt (32, 32a) umfasst, der als Rampe für den Transportwagen in den Aufnahmebereich dient.

6. Monument (12f) nach Anspruch 1, wobei das Monument-Anschlussende (38b) mit einem Transportmittel-Anschlussende (40b) verbindbar ist, das zur Verbindung mit einem Staufach-Anschlussende (38c) geeignet ist.

7. Monument (12d) nach einem der vorhergehenden Ansprüche, weiter umfassend:
eine Induktionsschleife (42), über die mit einer Induktionsschleife (44) des Transportmittels das Monument mit Strom versorgt werden kann.

8. Einbausystem zum Einbau in ein Transportmittel, umfassend:
ein Monument nach einem der Ansprüche 1 bis 7.

9. Einbausystem für ein Transportmittel nach Anspruch 8, weiter umfassend:
wenigstens zwei Staufächer (52a, 52b), deren Erstreckung in Transportmittel-Längsrichtung sich voneinander unterscheiden, und/oder
ein Staufach (52c) dessen Erstreckung in Transportmittel-Längsrichtung einstellbar ist.

10. Einbausystem nach einem der Ansprüche 8 oder 9, weiter umfassend:
ein Ausgleichselement (70), das dazu geeignet ist, einen zwischen dem Monument (12i) und einer Seitenverkleidung (66i) des Transportmittels entstehenden Hohlraum zumindest teilweise auszufüllen.

11. Einbausystem nach einem der Ansprüche 8 bis 10, weiter umfassend:
eine Deckenverkleidung (70) für die Kabine (10) des Transportmittels,
wobei die Deckenverkleidung (70) über erste Befestigungselemente (72) mit der Kabine (10) verbindbar ist,
wobei das Monument (12j) über zweite Befestigungselemente (48) mit der Kabine verbindbar ist,
wobei das Monument zwischen einem Boden (17) der Kabine und der Deckenverkleidung (70) die Kabine begrenzen kann.

12. Einbausystem nach Anspruch 11, weiter umfassend:
eine Seitenverkleidung (74) für die Kabine (10) des Transportmittels,
wobei die Seitenverkleidung (74) zwischen dem Boden (17) der Kabine und der Deckenverkleidung (70) die Kabine begrenzen kann,
wobei das Monument (12j) und die Seitenverkleidung (74) an gleichen Befestigungsstellen am Transportmittel anbringbar sind.

13. Transportmittel, insbesondere Luftfahrzeug oder Flugzeug, mit einem Monument nach einem der Ansprüche 1 bis 7 oder einem Einbausystem nach einem der Ansprüche 8 bis 12.

## Claims

1. A monument (12) for a cabin (10) of a transportation means, comprising:
an attachment element for attaching the monument (12) to the cabin (10) of the transportation means,
at least one supply connection (36, 36a, 36b) for connecting the monument to at least one on-board system of the transportation means,
wherein the attachment element is designed in such a manner that attachment of the monument (12) can take place in a region of relative positions (R) of the monument (12) relative to the cabin (10) of the transportation means,
wherein the attachment element is connectable to a seat rail (16) of the transportation means,
wherein the supply connection comprises a monument-connection end (38, 38a, 38b) that is connectable to a transportation-means connection end (40, 40a, 40b) of the on-board system,
wherein the monument-connection end (38, 38a, 38b) is movable relative to the monument, in that the monument-connection end is shiftable along an opening of the monument.

2. The monument (12f) of claim 1, wherein the attachment element (50) can be connected to an attachment rail (48) for a hatrack (52).

3. The monument (12) of any one of the preceding claims, wherein the attachment element comprises an attachment rail (14).

4. The monument (12a, 12b) of any one of the preceding claims, further comprising:
attachment elements for attaching the monument to a floor (17) of the cabin, and
a load-distributing substructure (26a, 26b),
wherein the load-distributing substructure (26a, 26b) is suitable for evenly distributing the forces which the monument exerts on the attachment elements and the floor (17).

5. The monument (12a, 12b) of claim 4, further comprising:
a trolley (30),
an accommodation region (28) for the trolley,
wherein the trolley can be driven into and out of the accommodation region,
wherein the load-distributing substructure comprises a base plate (26a, 26b), and
wherein the base plate (26a, 26b) comprises a wedge-shaped section (32, 32a) that serves as a ramp for the trolley in the accommodation region.

6. The monument (12f) of claim 1, wherein the monument-connection end (38b) is connectable to a transportation-means connection end (40b) that is suitable for connection to a hatrack-connection end (38c).

7. The monument (12d) of any one of the preceding claims, further comprising:
an induction loop (42) by means of which, by way of an induction loop (44) of the transportation means, the monument can be supplied with power.

8. A mounting system for installation in a transportation means, comprising:
a monument of any one of claims 1 to 7.

9. The mounting system for a transportation means of claim 8, further comprising:
at least two hatracks (52a, 52b) whose extensions in longitudinal direction of the transportation means differ from one another, and/or
a hatrack (52c) whose extension in longitudinal direction of the transportation means is adjustable.

10. The mounting system of one of claims 8 or 9, further comprising:
a compensating element (70) that is suitable at least in part to fill in a void arising between the monument (12i) and a lateral lining (66i) of the transportation means.

11. The mounting system of any one of claims 8 to 10, further comprising:
a ceiling lining (70) for the cabin (10) of the transportation means,
wherein the ceiling lining (70) is connectable to the cabin (10) by way of first attachment elements (72),
wherein the monument (12j) is connectable to the cabin by way of second attachment elements (48),
wherein the monument can delimit the cabin between a floor (17) of the cabin and the ceiling lining (70).

12. The mounting system of claim 11, further comprising:
a lateral lining (74) for the cabin (10) of the transportation means,
wherein the lateral lining (74) can delimit the cabin between the floor (17) of the cabin and the ceiling lining (70),
wherein the monument (12j) and the lateral lining (74) can be affixed to identical attachment positions on the transportation means.

13. A transportation means, in particular an airplane or aircraft, comprising a monument of any one of claims 1 to 7 or comprising a mounting system of any one of claims 8 to 12.

## Revendications

1. Structure (12) pour une cabine (10) d'un moyen de transport, comprenant :
- un élément de fixation pour la fixation de la structure (12) à la cabine (10) du moyen de transport,
- au moins un raccord d'alimentation (36, 36a, 36b) pour raccorder la structure à au moins un système de bord du moyen de transport,
l'élément de fixation étant configuré de telle sorte que la fixation de la structure (12) puisse être réalisée dans une plage de positions relatives (R) de la structure (12) par rapport à la cabine (10) du moyen de transport,
l'élément de fixation pouvant être relié à un rail de siège (16) du moyen de transport, le raccord d'alimentation présentant une extrémité de raccord de la structure (38, 38a, 3 8b), qui peut être raccordée à une extrémité de raccord du moyen de transport (40, 40a, 40b) du système de bord,
l'extrémité de raccord de la structure (38, 38a, 38b) étant mobile par rapport à la structure, l'extrémité de raccord de la structure pouvant être déplacée le long d'une ouverture de la structure.

2. Structure (12f) selon la revendication 1, l'élément de fixation pouvant être relié à un rail de fixation (48) pour un compartiment de rangement (52).

3. Structure (12) selon l'une des revendications précédentes, l'élément de fixation comprenant un rail de fixation (14).

4. Structure (12a, 12b) selon l'une des revendications précédentes, comprenant en outre :
- des éléments de fixation pour la fixation de la structure à un plancher (17) de la cabine, et
- une infrastructure (26a, 26b) répartissant une charge, l'infrastructure (26a, 26b) répartissant la charge étant adaptée à une répartition uniforme des forces exercées par la structure sur les éléments de fixation et le plancher (17).

5. Structure (12a, 12b) selon la revendication 4, comprenant en outre :
- un chariot de transport (30),
- une zone de réception (28) pour le chariot de transport,
le chariot de transport pouvant être inséré dans et retiré de la zone de réception, l'infrastructure répartissant la charge comprenant une plaque de base (26a, 26b), et la plaque de base (26a, 26b) comprenant une section (32, 32a) en forme de coin, servant de rampe pour le chariot de transport dans la zone de réception.

6. Structure (12f) selon la revendication 1, l'extrémité de raccord de la structure (38b) pouvant être raccordée à une extrémité de raccord du moyen de transport (40b), qui est adaptée au raccordement à une extrémité de raccord du compartiment de rangement (38c).

7. Structure (12d) selon l'une des revendications précédentes, comprenant en outre :
- une boucle d'induction (42), par laquelle la structure peut être alimentée en courant avec une boucle d'induction (44) du moyen de transport.

8. Système d'installation pour l'installation dans un moyen de transport, comprenant :
- une structure selon l'une des revendications 1 à 7.

9. Système d'installation pour un moyen de transport selon la revendication 8, comprenant en outre :
- au moins deux compartiments de rangement (52a, 52b), dont l'extension dans la direction longitudinale du moyen de transport se distingue l'une de l'autre, et/ou
- un compartiment de rangement (52c) dont l'extension peut être réglée dans la direction longitudinale du moyen de transport.

10. Système d'installation selon l'une des revendications 8 ou 9, comprenant en outre :
- un élément compensateur (70) adapté à remplir au moins partiellement une cavité apparaissant entre la structure (12i) et un habillage latéral (66i) du moyen de transport.

11. Système d'installation selon l'une des revendications 8 à 10, comprenant en outre :
- un habillage de plafond (70) pour la cabine (10) du moyen de transport, l'habillage de plafond (70) pouvant être raccordé via des premiers éléments de fixation (72) à la cabine (10),
la structure (12j) pouvant être raccordé via deux éléments de fixation (48) à la cabine,
la structure pouvant limiter la cabine entre un plancher (17) de la cabine et l'habillage de plafond (70).

12. Système d'installation selon la revendication 11, comprenant en outre :
- un habillage latéral (74) pour la cabine (10) du moyen de transport, l'habillage latéral (74) pouvant limiter la cabine entre le plancher (17) de la cabine et l'habillage de plafond (70),
la structure (12j) et l'habillage latéral (74) pouvant être fixés aux mêmes points de fixation dans le moyen de transport.

13. Moyen de transport, en particulier un aéronef ou un avion, avec une structure selon l'une des revendications 1 à 7 ou un système d'installation selon l'une des revendications 8 à 12.
